# EUROPEAN PATENT SPECIFICATION

(11) **EP 3 312 997 B1**
(45) Date of publication and mention of the grant of the patent: **03.08.2022**
(21) Application number: 16813912.9
(22) Date of filing: 08.06.2016
(51) Int. Cl.: H04B 1/40, G08B 17/00, G08B 25/10, H04W 52/02, H04W 88/06, G08B 25/00

(54) **FIRE ALARM AND FIRE ALARM SYSTEM**
FEUERALARM UND FEUERALARMSYSTEM
AVERTISSEUR D'INCENDIE ET SYSTÈME D'ALARME INCENDIE

(30) Priority: 22.06.2015 JP 2015124826
(43) Date of publication of application: 25.04.2018
(73) Proprietor: Panasonic Intellectual Property Management Co., Ltd., Osaka-shi, Osaka 540-6207 (JP)
(72) Inventor: KURITA, Masanori, Osaka-shi, Osaka 540-6207 (JP); YOSHIKI, Kazuhisa, Osaka-shi, Osaka 540-6207 (JP); SAKAMOTO, Koji, Osaka-shi, Osaka 540-6207 (JP); SIMADA, Yositake, Osaka-shi, Osaka 540-6207 (JP)
(74) Representative: Appelt, Christian W.
(86) International application number: PCT/JP2016/002765
(87) International publication number: WO 2016/208136

(56) References cited:
- EP-A1- 2 360 980
- WO-A1-00/21053
- JP-A- 2008 258 702
- JP-A- 2011 118 698
- JP-A- 2013 235 554
- JP-A- 2013 235 554

## Description

### Technical Field

The present invention generally relates to fire alarms and fire alarm systems, and more particularly relates to a fire alarm and fire alarm system for wirelessly communicating with other fire alarms and a management device.

### Background Art

A system allowing a plurality of battery-driven fire alarms to wirelessly communicate with each other has been known in the art (see, for example, Patent Document 1).

According to Patent Document 1, each of the fire alarms sequentially repeats signal receiving periods and idle periods. In other words, each fire alarm performs intermittent reception in a predetermined cycle time. On detecting a fire, each fire alarm transmits a fire signal to the other fire alarms for a transmission period, which is longer than the idle period.

The system of Patent Document 1 reduces the overall power consumption of the fire alarms by performing the intermittent receptions in a predetermined cycle time.

Recently, a plurality of fire alarms are increasingly required to not only form a system (or a network) in which those fire alarms wirelessly communicate with each other but also a system (or a network) in which those fire alarms additionally communicate with a management device that manages those fire alarms as well.

Nevertheless, requiring a fire alarm to communicate with not only the other fire alarms but also the management device would increase the power consumption, compared to requiring those fire alarms to simply communicate with each other. For this reason, the power consumption needs to be further reduced to extend the battery life of the fire alarms.

### Citation List

### Patent Literature

**Patent Document 1:** JP 2008-4033 A

EP2360980A1 is a further patent document and concerns the reduction of power consumption in a wireless network of battery powered smoke detectors while avoiding excessive response times.

### Summary of Invention

It view of the foregoing background, it is therefore an object of the present invention to provide a fire alarm and fire alarm system contributing to reduction in power consumption even in a situation where each fire alarm needs to communicate with not only the other fire alarms but also a management device as well.

Afire alarm according to the invention is defined in claims 1 and 8.

A fire alarm system according to another aspect of the present invention includes: a plurality of fire alarms, each having the configuration described above; and the management device.

Such a fire alarm and fire alarm system contributes to reduction in power consumption even in a situation where the fire alarm needs to communicate with not only the other fire alarms but also a management device as well.

### Brief Description of Drawings

FIG. 1 illustrates a configuration for a fire alarm system according to an embodiment of the present invention.
FIG. 2 is a flowchart showing the procedure of operations to be performed by a fire alarm included in the fire alarm system.
FIG. 3 is a sequence chart showing specifically how the fire alarm system operates.
FIG. 4A shows how the consumption current of a communication circuit changes in a fire alarm according to a comparative example, and FIG. 4B shows how the consumption current of a communication circuit changes in a fire alarm according to an embodiment of the present invention.
FIG. 5 is a sequence chart showing an exemplary operation of a fire alarm according to an embodiment of the present invention in a situation where the fire alarm has received no response signals from any of the other fire alarms.
FIG. 6 shows another exemplary operation of the fire alarm in such a situation where the fire alarm has received no response signals from any of the other fire alarms.

### Description of Embodiments

### (Embodiments)

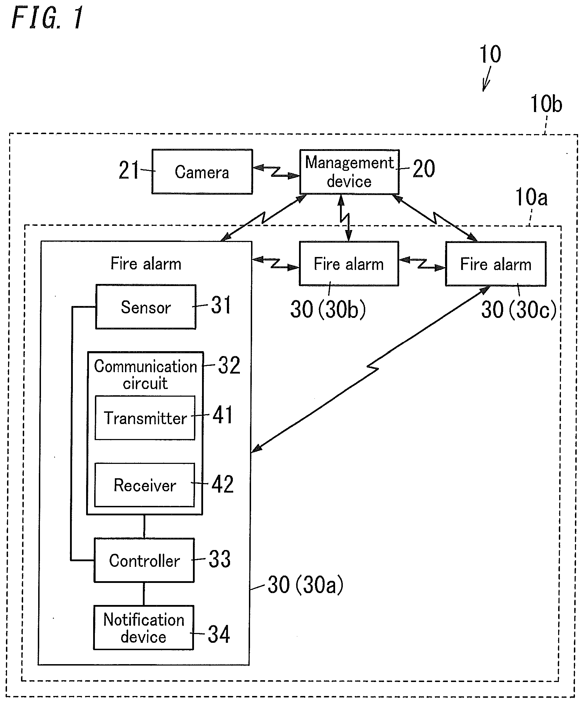

A fire alarm system 10 according to an exemplary embodiment will now be described. As shown in FIG. 1, the fire alarm system 10 includes a management device 20, a camera 21, and a plurality of fire alarms 30, all of which may be installed in the same house, for example. Although these fire alarms are generally designated herein by the reference numeral 30 as a matter of principle, the fire alarms 30 will be sometimes designated herein by the reference numerals 30a, 30b, and 30c, respectively, when they need to be distinguished from each other.

Also, in this fire alarm system 10, the plurality of fire alarms 30 form a first sub-system 10a, while the management device 20, the camera 21, and the plurality of fire alarms 30 form a second sub-system 10b. In the first sub-system 10a, each of the fire alarms 30 communicates wirelessly with the other fire alarms 30 according to a first communications protocol using a radio wave as a transmission medium. In the second sub-system 10b, the management device 20 communicates wirelessly with the camera 21 and the plurality of fire alarms 30 according to a second communications protocol different from the first communications protocol. In the second sub-system 10b, the management device 20 communicates with the plurality of fire alarms 30 and the camera 21 with synchronization established between them. For that purpose, to synchronize the operations of the camera 21 and the plurality of fire alarms 30 with each other, the management device 20 transmits a sync signal at regular intervals to the camera 21 and the plurality of fire alarms 30.

In the first sub-system 10a, communication is carried out asynchronously between the plurality of fire alarms 30. That is to say, communication between the plurality of fire alarms 30 is carried out according to the first communications protocol without transmitting or receiving any sync signals between them.

The fire alarm 30 performs intermittent reception in a predetermined cycle time (of 4 seconds, for example). Note that this numerical value representing the predetermined cycle time is only an example and should not be construed as limiting. The predetermined cycle time corresponds to one cycle time of the intermittent reception.

The management device 20 may operate with the power supplied from a utility power supply, for example, and wirelessly transmits and receives signals to/from (i.e., carries out wireless communications with) the camera 21 and the respective fire alarms 30.

The camera 21 captures an image of the site where this fire alarm system 10 is installed, and transmits the image to the management device 20 according to the second communications protocol. Each of the fire alarms 30 may be battery-driven, for example, to detect any fire in the site of installation. On detecting the outbreak of a fire, each fire alarm 30 transmits a fire signal indicating the outbreak of a fire to the management device 20 according to the second communications protocol and to the other fire alarms 30 according to the first communications protocol. On receiving the fire signal, the management device 20 notifies other devices of the outbreak of the fire over the Internet, for example. When transmitting or receiving the fire signal to/from another fire alarm 30, each fire alarm 30 sets off an alarm, for example, to notify the residents of the outbreak of the fire.

Next, the configuration of the fire alarm 30 will be described. As shown in FIG. 1, the fire alarm 30 includes a sensor 31, a communication circuit 32, a controller 33, and a notification device 34.

The sensor 31 may be implemented, for example, as a heat sensor, a smoke sensor, a flame sensor, or any other type of sensor, and detects any fire.

As shown in FIG. 1, the communication circuit 32 includes a transmitter 41 and a receiver 42.

The transmitter 41 has a plurality of transmission frequency bands (transmission channels) as signal transmission bands, and transmits a signal by switching a plurality of transmission channels according to the communications protocol. Specifically, the transmitter 41 has a first transmission channel for use in the first communications protocol and a second transmission channel for use in the second communications protocol. The transmitter 41 uses the first transmission channel to transmit a signal according to the first communications protocol, and uses the second transmission channel to transmit a signal according to the second communications protocol. For example, the transmitter 41 uses the first transmission channel to transmit the fire signal described above to the other fire alarms 30, and uses the second transmission channel to transmit the fire signal to the management device 20.

The receiver 42 has a plurality of reception frequency bands (reception channels) as signal reception bands, and receives a signal by switching a plurality of reception channels according to the communications protocol. Specifically, the receiver 42 has a first reception channel for use in the first communications protocol and a second reception channel for use in the second communications protocol. The receiver 42 uses the first reception channel to receive a signal according to the first communications protocol, and uses the second reception channel to receive a signal according to the second communications protocol. For example, the receiver 42 uses the first reception channel to receive the fire signal, and uses the second reception channel to receive a signal from the management device 20.

The receiver 42 also has the function of measuring the strength of a signal received (i.e., a so-called "received signal strength indication (RSSI)" function).

The controller 33 includes, as its major component, a microcomputer (or microcontroller), and performs a desired function by executing a program stored in a memory. Note that the program may have been written in a memory in advance or may be provided after having been stored in a storage medium such as a memory card.

On receiving the sync signal from the management device 20, the controller 33 activates the communication circuit 32 in a predetermined cycle time (i.e., the cycle time of the intermittent reception) by setting the point in time of reception to be a reference point in time. Specifically, after receiving the sync signal from the management device 20, the controller 33 supplies the power of the battery to the communication circuit 32 in a predetermined cycle time starting from the reference point in time when the sync signal is received. When the communication circuit 32 is activated, the controller 33 instructs the receiver 42 to receive the signal on the first reception channel. At this time, the receiver 42 sets the reception channel to be the first reception channel. If the strength of the signal received on the first reception channel is equal to or greater than a first threshold value (which is an exemplary threshold level), the controller 33 instructs the communication circuit 32 to receive the signals from the other fire alarms 30 on the first reception channel continuously until a predetermined cycle time (hereinafter referred to as a "first reception cycle time") passes. Specifically, the controller 33 continues to supply the power of the battery to the communication circuit 32 until the first reception cycle time passes. When the first reception cycle time passes, the controller 33 will stop supplying the power of the battery to the communication circuit 32, thereby deactivating the communication circuit 32 and entering a power saving mode. This allows the communication circuit 32 to perform the intermittent reception. In this case, the first reception cycle time is shorter than the predetermined cycle time described above, and may be one second, for example. Note that this numerical value is only an example and should not be construed as limiting.

If the strength of the signal received on the first reception channel is less than the first threshold value, the controller 33 instructs the receiver 42 to receive the signal on the second reception channel. At this time, the receiver 42 switches the reception channels from the first reception channel to the second reception channel. If the strength of the signal received on the second reception channel is equal to or greater than a second threshold value (which is another exemplary threshold level), the controller 33 instructs the communication circuit 32 to receive the signal from the management device 20 on the second reception channel continuously until a predetermined cycle time (hereinafter referred to as a "second reception cycle time") passes. Specifically, the controller 33 continues to supply the power of the battery to the communication circuit 32 until the second reception cycle time passes. When the second reception cycle time passes, the controller 33 will stop supplying the power of the battery to the communication circuit 32, thereby deactivating the communication circuit 32. This allows the communication circuit 32 to perform the intermittent reception. In this case, the second reception cycle time is shorter than the predetermined cycle time described above, and may be one second, for example. Note that this numerical value is only an example and should not be construed as limiting.

If the controller 33 has never received the sync signal from the management device 20 (i.e., if no synchronization is established with the management device 20), then the controller 33 instructs the communication circuit 32 to communicate asynchronously with the other fire alarms 30 in a predetermined cycle time. If the controller 33 has never received the sync signal from the management device 20, then the controller 33 may also instruct the communication circuit 32 to be ready to receive the sync signal from the management device 20.

If the sensor 31 has detected the outbreak of a fire, the controller 33 instructs the communication circuit 32 to transmit the fire signal to the management device 20. That is to say, if the sensor 31 has detected the outbreak of a fire, then the transmitter 41 of the communication circuit 32 transmits the fire signal to the management device 20. The fire signal may include a source ID indicating the source, a destination ID indicating the destination, and data indicating the outbreak of a fire. After the fire signal has been transmitted to the management device 20, the controller 33 instructs the communication circuit 32 to perform transmission processing of repeatedly transmitting the fire signal to the other fire alarms 30 in a cycle time from the timing of activating the communication circuit 32 through a predetermined time (hereinafter referred to as "transmission cycle time"). That is to say, when activated under the control of the controller 33, the transmitter 41 repeatedly transmits the fire signal to the other fire alarms 30 over the first transmission channel until the transmission cycle time passes. In this case, the transmission cycle time is shorter than the predetermined cycle time described above, and may be one second, for example. Note that this numerical value is only an example and should not be construed as limiting. It should also be noted that the transmission cycle time at least partially overlaps with the first reception cycle time.

The controller 33 instructs the transmitter 41 to transmit, when the receiver 42 receives the fire signal, a response signal, acknowledging the reception of the fire signal, to another fire alarm 30 that is the source of the fire signal during the first reception cycle time. In this case, the response signal may include a source ID indicating the source, a destination ID indicating the destination, and data indicating the reception of the fire signal.

When the sensor 31 detects the outbreak of a fire, the notification device 34 notifies the residents of the outbreak of a fire with a bell ringing sound, an audio alert, or any other means. Likewise, on receiving the fire signal from another fire alarm 30, the notification device 34 also notifies the residents of the outbreak of a fire.

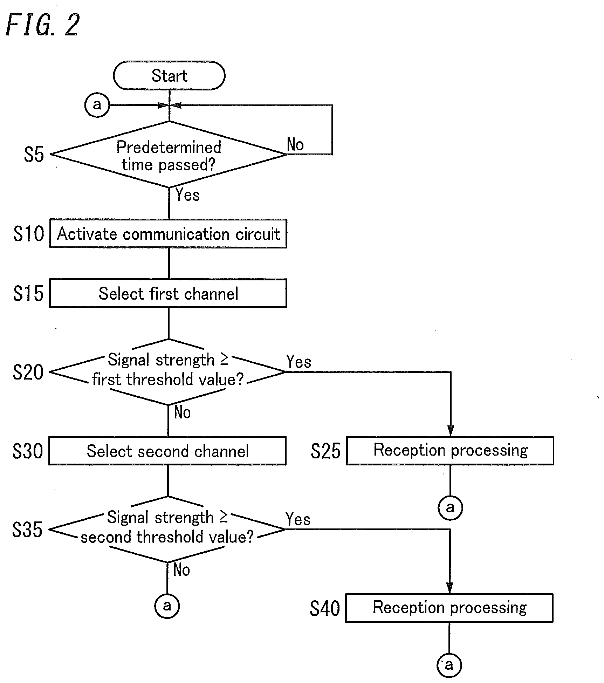

Next, it will be described with reference to the flowchart illustrated in FIG. 2 how the fire alarm 30 operates in measuring the strength of the signal received. In the following description, the fire alarm 30 is supposed to have already received the sync signal from the management device 20.

The controller 33 determines whether or not a predetermined amount of time has passed (in Step S5). Specifically, the controller 33 determines whether or not a predetermined amount of time (of 4 seconds, for example) has passed since the sync signal was received or since the communication circuit 32 was activated last time.

If a determination has been made that the predetermined amount of time has not passed yet (i.e., if the answer is "NO" in Step S5), then the process waits until the predetermined amount of time passes.

On the other hand, if a determination has been made that the predetermined amount of time has already passed (i.e., if the answer is "YES" in Step S5), the controller 33 activates the communication circuit 32 (in Step S10). After the communication circuit 32 has been activated, the receiver 42 of the communication circuit 32 sets the reception channel to be the first reception channel and starts receiving the signal (in Step S15). The controller 33 determines whether or not the signal strength measured by the receiver 42 is equal to or greater than a first threshold value (in Step S20).

If a determination has been made that the result of measurement (i.e., the signal strength measured) is equal to or greater than the first threshold value (i.e., if the answer is "YES" in Step S20), the controller 33 performs reception processing on the first reception channel (in Step S25). Specifically, the receiver 42 receives, on the first reception channel, the signal transmitted from another fire alarm 30. Note that when the reception cycle time passes, the controller 33 will stop supplying the power of the battery to the communication circuit 32.

On the other hand, if a determination has been made that the result of measurement (i.e., the signal strength measured) is less than the first threshold value (i.e., if the answer is "NO" in Step S20), then the controller 33 instructs the receiver 42 to change the reception channels from the first reception channel to the second reception channel. That is to say, the receiver 42 sets the reception channel to be the second reception channel and starts receiving the signal (in Step S30). Next, the controller 33 determines whether or not the signal strength measured by the receiver 42 is equal to or greater than a second threshold value (in Step S35).

If a determination has been made that the result measured is equal to or greater than the second threshold value (i.e., if the answer is "YES" in Step S35), the controller 33 performs reception processing on the second reception channel (in Step S40). Specifically, the receiver 42 receives, on the second reception channel, the signal transmitted from the management device 20. Note that when the reception cycle time passes, the controller 33 will stop supplying the power of the battery to the communication circuit 32.

On the other hand, if a determination has been made that the result measured is less than the second threshold value (i.e., if the answer is "NO" in Step S35), then the process goes back to Step S5.

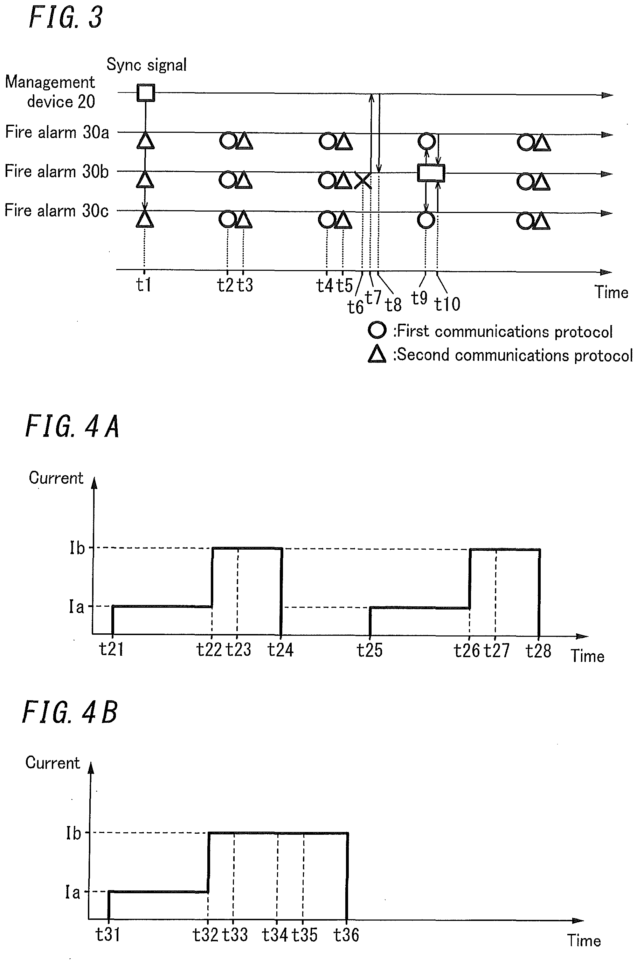

Next, it will be described with reference to the sequence chart shown in FIG. 3 specifically how the fire alarm system 10 operates.

First, at a time t1, the management device 20 transmits a sync signal to the fire alarms 30a, 30b, and 30c in order to establish synchronization with the fire alarms 30a, 30b, 30c.

Every time a predetermined amount of time (of 4 seconds, for example) passes since the reception of the sync signal, each of the fire alarms 30a, 30b, 30c activates their communication circuit 32, receives a signal according to the first communications protocol, and also receives a signal according to the second communications protocol (from a time t2 through a time t5). If the strength of the signal received according to the first communications protocol is equal to or greater than the first threshold value, the fire alarm 30a, 30b, 30c does not receive the signal according to the second communications protocol. At the times t2-t5, the strength of the signal received according to the first communications protocol and the strength of the signal received according to the second communications protocol are less than the first threshold value and the second threshold value, respectively. As shown in FIG. 3, the fire alarm 30b detects a fire at a time t6. Then, the fire alarm 30b transmits a fire signal to the management device 20 (at a time t7). In response, the fire alarm 30b receives a response signal from the management device 20 (at a time t8). Thereafter, at the next timing of activating the communication circuit 32 (at a time t9), the fire alarm 30b transmits the fire signal to the fire alarms 30a, 30c. In response, the fire alarms 30a, 30c, each having received the fire signal, transmit a response signal to the fire alarm 30b. Thus, the fire alarm 30b receives the response signal from each of the fire alarms 30a, 30c (at a time t10).

If the fire alarm 30 communicates with the other fire alarms 30 asynchronously according to the first communications protocol, the former fire alarm 30 is unable to determine the timing when the other fire alarms 30, which are communication partners, are ready to receive the signals. Thus, the fire alarm 30 that transmits a signal needs to carry out an asynchronous communication. Examples of the asynchronous communication herein include a method of transmitting a signal with the signal transmission cycle time set to be longer than the cycle time of the intermittent reception and a method of repeatedly transmitting and stopping transmitting signals.

On the other hand, according to this embodiment, the transmission cycle time in which one fire alarm 30 transmits a signal to the other fire alarms 30 is set to be shorter than the predetermined cycle time (i.e., the cycle time of the intermittent reception). The reason for adopting this setting will be described below. According to this embodiment, on receiving a sync signal from the management device 20 that forms part of another system (e.g., the second sub-system 10b in this embodiment) to communicate with synchronously, each fire alarm 30 communicates with the other fire alarms 30 in a predetermined cycle time (corresponding to the cycle time of intermittent reception) that starts from the point in time of reception as a reference point in time. That is why even if a signal is transmitted at the timing when the communication circuit 32 of the fire alarm 30 that is going to transmit the signal is activated, the other fire alarms 30 are ready to receive the signal, because the communication circuit 32 is activated in each of the other fire alarms 30 that are communication partners. That is to say, the timing when one fire alarm 30 transmits a signal is synchronous with the timing when the other fire alarms 30 receive the signal. Thus, it can be seen that the transmission cycle time may be shorter than in a situation where signals are transmitted asynchronously. In other words, the transmission cycle time may be shorter than the predetermined cycle time (i.e., the cycle time of intermittent reception).

In addition, according to this embodiment, the fire alarm 30 is also configured to measure the respective strengths of the signal received according to the first communications protocol and the signal received according to the second communications protocol when the communication circuit 32 is activated. That is why compared to a fire alarm (according to a comparative example) for measuring the strength of a signal received according to the first communications protocol by activating the communication circuit 32 at one timing and measuring the strength of a signal received according to the second communications protocol by activating the communication circuit 32 at another timing, this fire alarm is able to reduce the power consumption.

For example, a fire alarm according to a comparative example activates the communication circuit at a time t21 in order to measure the strength of a signal received according to the first communications protocol as shown in FIG. 4A. After the communication circuit has been activated, the receiver of the comparative example sets the reception channel to be a first channel at a time t22. Next, from a time t23 through a time t24, the receiver of the comparative example measures the strength of the signal received according to the first communications protocol. On finishing this intermittent reception, the fire alarm of the comparative example temporarily deactivates the communication circuit. After that, at a time t25, the fire alarm of the comparative example activates the communication circuit again to measure the strength of the signal received according to the second communications protocol. After the communication circuit has been activated, the receiver of the comparative example sets the reception channel to be a second channel at a time t26. Next, from a time t27 through a time t28, the receiver of the comparative example measures the strength of the signal received according to the second communications protocol. On finishing this intermittent reception, the fire alarm of the comparative example deactivates the communication circuit.

On the other hand, the fire alarm 30 of this embodiment activates the communication circuit at a time t31 as shown in FIG. 4B. After the communication circuit has been activated, the receiver 42 sets the reception channel to be a first channel at a time t32. Next, from a time t33 through a time t34, the receiver 42 measures the strength of the signal received according to the first communications protocol. If no signals having a strength equal to or greater than a first threshold value have been received during this time period of t33 to t34, the receiver 42 immediately sets the reception channel to be a second channel at the time t34 without interval. Next, from a time t35 through a time t36, the receiver 42 measures the strength of the signal received according to the second communications protocol.

As shown in FIGS. 4A and 4B, the fire alarm 30 of this embodiment reduces the power to be consumed to activate the communication circuit 32 compared to the fire alarm of the comparative example, thus contributing to extending the life of the battery of the fire alarm 30.

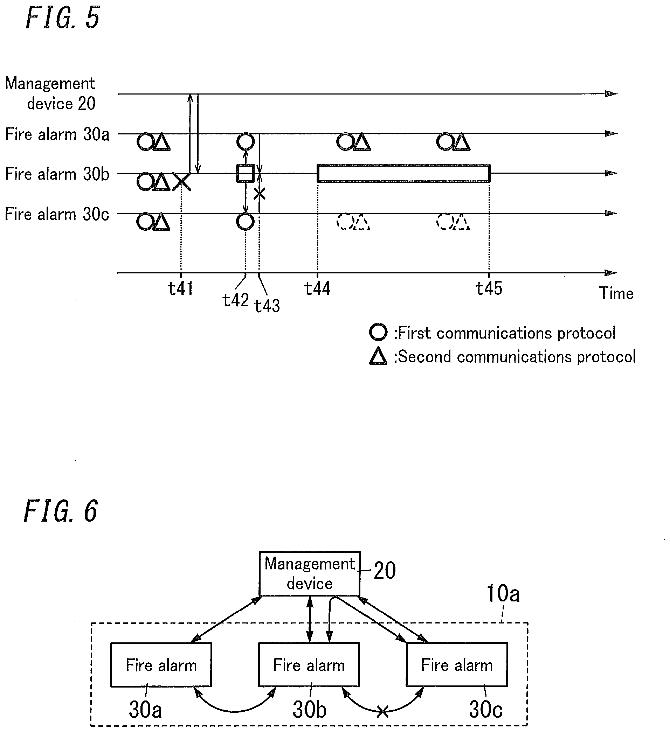

In this embodiment, if, after transmitting a fire signal to the other fire alarms 30, the fire alarm 30 receives no response signal from at least one of the other fire alarms 30, then the former fire alarm 30 may re-transmit the fire signal asynchronously to that latter fire alarm 30. This operation will be described by way of a specific example. As shown in FIG. 5, on detecting the outbreak of a fire at a time t41, the fire alarm 30b transmits a fire signal to the management device 20. Next, at a time t42, the fire alarm 30b transmits the fire signal to the other fire alarms 30a, 30c. At a time t43, the fire alarm 30b may receive a response signal from the fire alarm 30a but may receive no response signal from the fire alarm 30c, for example. In that case, the fire alarm 30b re-transmits the fire signal to the fire alarm 30c in a time period of t44 to t45. This time period t44-t45 is a period for transmitting a signal when no synchronization is established and longer than the predetermined cycle time. Note that the fire alarm 30 that has transmitted the fire signal may identify that fire alarm 30 that has transmitted no response signals with a source ID included in the fire signal and another source ID included in the response signal.

Alternatively, if, after transmitting a fire signal to the other fire alarms 30, the fire alarm 30 receives no response signal from at least one of the other fire alarms 30, then the former fire alarm 30 may re-transmit the fire signal according to the second communications protocol to the latter fire alarm 30 via the management device 20. For example, if the fire alarm 30b has received a response signal from the fire alarm 30a but has received no response signal from the fire alarm 30c, then the fire alarm 30b re-transmits the fire signal to the fire alarm 30c via the management device 20 as shown in FIG. 6. For example, the fire alarm 30b may transmit a request signal, requesting the management device 20 to transmit the fire signal to the fire alarm 30c, as well as the fire signal itself to the management device 20. On receiving the request signal, the management device 20 transmits the fire signal received to the fire alarm 30c. In this case, the fire alarm 30b requests the management device 20 to transmit the fire signal at a timing when the predetermined cycle time has passed since the fire alarm 30b transmitted the fire signal to the fire alarms 30a, 30b (i.e., since the communication circuit 32 was activated). In transmitting an additional signal after transmitting the signal to the fire alarm 30c via the management device 20, the fire alarm 30b may either transmit that additional signal according to the second communications protocol via the management device 20 or transmit that additional signal to the fire alarm 30c according to the first communications protocol.

The first and second threshold values mentioned in the embodiment described above may be either the same value or two different values.

In the embodiment described above, if the strength of the signal received according to the first communications protocol is equal to or greater than the first threshold value, the fire alarm 30 is supposed not to measure the strength of the signal received according to the second communications protocol. However, this is only a non-limiting exemplary embodiment. Alternatively, even if the strength of the signal received according to the first communications protocol is equal to or greater than the first threshold value, the fire alarm 30 may measure the strength of the signal received according to the second communications protocol. In that case, the controller 33 of the fire alarm 30 instructs the receiver of the communication circuit 32 to receive the signal according to a corresponding one of the first or second protocol, a result measured by which is greater than a result measured by the other.

Also, according to the embodiment described above, the receiver 42 is configured to measure the signal strength of the signal received according to the first communications protocol first, and then measure that of the signal received according to the second communications protocol. However, this is only a non-limiting exemplary embodiment. Alternatively, the signal strengths may also be measured in reverse order, i.e., the strength of the signal received according to the second communications protocol may be measured before that of the signal received according to the first communications protocol.

As can be seen from the foregoing description, a fire alarm (30) according to a first aspect of the present invention includes: a communication circuit (32) configured to: receive a signal by intermittent reception; communicate with another fire alarm (30) as a different fire alarm (30) according to a first communications protocol and communicate with a management device (20) according to a second communications protocol different from the first communications protocol; after being activated, measure strength of a signal received according to the first communications protocol and also measure strength of a signal received according to the second communications protocol; and then, when any one of results measured according to the first and second protocols is equal to or greater than a threshold level, receive a signal according to a corresponding one of the first or second protocol, a result measured by which is equal to or greater than the threshold level; and a controller (33) configured to activate the communication circuit (32) in a cycle time of the intermittent reception.

According to this configuration, a fire alarm (30) is configured to allow a communication circuit (32) to measure respective signal strengths of both a signal received according to a first communications protocol and a signal received according to a second communications protocol after activating the communication circuit (32). Thus, compared to a situation where the communication circuit (32) is activated every time the signal strength needs to be measured, this reduces the overall power consumption for activating the communication circuit (32). Consequently, if the fire alarm (30) is battery-driven, this extends the life of the battery.

A fire alarm (30) according to a second aspect of the present invention is an embodiment of the first aspect. In the second aspect, the communication circuit (32) is configured to: receive the signal according to the first communications protocol; if a result obtained by measuring the strength of the signal received according to the first communications protocol is equal to or greater than a first threshold value as the threshold level, then receive a signal according to the first communications protocol in a first reception cycle time shorter than the cycle time of the intermittent reception; if the result is less than the first threshold value, then receive a signal according to the second communications protocol; and if a result obtained by measuring strength of the signal received according to the second communications protocol is equal to or greater than a second threshold value as the threshold level, then receive a signal according to the second communications protocol in a second reception cycle time shorter than the cycle time of the intermittent reception.

When communication is carried out between the fire alarms (30), sometimes a fire signal may be transmitted and received between them. If one fire alarm (30) has detected a fire, that fire alarm (30) needs to notify the different fire alarm (30) of that sooner than the management device (20). In such a situation, this configuration is beneficial, because this allows the fire alarm (30) to give a higher priority to the communication with the different fire alarm (30) than the communication with the management device (20). Thus, this configuration allows the fire alarm (30) to notify, when detecting a fire, the different fire alarm (30) of that sooner than the management device (20).

A fire alarm (30) according to a third aspect of the present invention is an embodiment of the first or second aspect. In the third aspect, communication according to the second communications protocol is carried out with a sync signal regularly transmitted from the management device (20) so that synchronization is established with the management device (20), and the communication circuit (32) is configured to, after receiving the sync signal, start performing the intermittent reception in the cycle time of the intermittent reception at a point in time when the sync signal is received.

According to this configuration, the fire alarm (30) receives, as a reference signal, a sync signal supplied from the management device (20), which allows the fire alarm (30) to establish synchronization with the different fire alarm (30). That is to say, in such a situation, in the first sub-system (10a), there is no need to transmit or receive the sync signal between the fire alarms (30), thus contributing to reduction in power consumption.

A fire alarm (30) according to a fourth aspect of the present invention is an embodiment of the third aspect. In the fourth aspect, the communication circuit (32) is further configured to transmit a signal to the different fire alarm (30), and the communication circuit (32) is configured to, if transmitting a signal to the different fire alarm (30) after receiving the sync signal, perform transmission processing of transmitting the signal to the different fire alarm (30) at a timing when the communication circuit (32) is activated.

According to this configuration, the fire alarm (30) transmits a signal to the different fire alarm (30) at a timing when the communication circuit (32) is activated. That is why if synchronization is established with the different fire alarm (30), the signal may be transmitted and received in a shorter cycle time.

A fire alarm (30) according to a fifth aspect of the present invention is an embodiment of the fourth aspect. In the fifth aspect, the transmission processing is carried out in a cycle time shorter than the cycle time of the intermittent reception. This configuration allows the fire alarm (30) to shorten the transmission processing cycle time to less than a predetermined cycle time, thus contributing to reduction in the power consumption of the communication circuit (32).

A fire alarm (30) according to a sixth aspect of the present invention is an embodiment of the fifth aspect. In the sixth aspect, the communication circuit (32) is configured to, if receiving, as a result of transmitting the signal to the different fire alarm (30) at the timing when the communication circuit (32) is activated, no response signal acknowledging reception of the signal from the different fire alarm (30), transmit the signal to the different fire alarm (30) according to an asynchronous communications protocol.

If the fire alarm (30) receives no response signal from the different fire alarm (30), no synchronization may be established with the different fire alarm (30). To deal with such a situation, according to this configuration, the fire alarm (30) transmits a signal to the different fire alarm (30) according to an asynchronous communications protocol, thus increasing the possibility that the different fire alarm (30) receives the signal safely.

A fire alarm (30) according to a seventh aspect of the present invention is an embodiment of the fifth aspect. In the seventh aspect, the communication circuit (32) is configured to, if receiving, as a result of transmitting the signal to the different fire alarm (30) at the timing when the communication circuit (32) is activated, receive no response signal acknowledging reception of the signal from the different fire alarm (30), transmit the signal to the different fire alarm (30) via the management device (20) according to the second communications protocol.

If the fire alarm (30) receives no response signal from the different fire alarm (30), no synchronization may be established with the different fire alarm (30). To deal with such a situation, according to this configuration, the fire alarm (30) transmits a signal to the different fire alarm (30) via the management device (20), thus increasing the possibility that the different fire alarm (30) receives the signal safely.

A fire alarm system (10) according to an eighth aspect of the present invention includes a plurality of fire alarms (30) according to any one of the first through seventh aspects described above, and the management device (20). This configuration allows the fire alarm system (10) to reduce the power consumption for activating the communication circuit (32). Consequently, if the plurality of fire alarms (30) are battery-driven, this extends the life of the battery.

### Reference Signs List

- 10: Fire Alarm System
- 10a: First Sub-System
- 10b: Second Sub-System
- 20: Management Device
- 30 (30a, 30b, 30c): Fire Alarm
- 32: Communication Circuit
- 33: Controller

## Claims

1. A fire alarm (30a) comprising:
a communication circuit (32) configured to
receive a signal by intermittent reception,
communicate with another fire alarm (30b,30c) according to a first communications protocol and to communicate with a management device (20) according to a second communications protocol different from the first communications protocol, the first communications protocol using a first reception channel to receive a signal from said another fire alarm (30b,30c) and the second communications protocol using a second reception channel different from the first reception channel, to receive a signal from the management device (20); and
a controller (33) configured to activate the communication circuit in a cycle time of the intermittent reception, the communication circuit being further configured to,
after being activated, measure a first strength of a signal on the first reception channel and,
if the first strength is equal to or greater than a first threshold value, receive the signal on the first reception channel,
else measure a second strength of a signal on the second reception channel and then,
if the second strength is equal to or greater than a second threshold value, receive the signal on the second reception channel.

2. The fire alarm (30a) of claim 1, wherein
the communication circuit is configured to:
receive the signal on the first reception channel;
if a result obtained by measuring the first strength of the signal received on the first reception channel is equal to or greater than the first threshold value, then receive the signal on the first reception channel in a first reception cycle time shorter than the cycle time of the intermittent reception;
if the result is less than the first threshold value, then receive a signal on the second reception channel; and
if a result obtained by measuring the second strength of the signal received on the second reception channel is equal to or greater than the second threshold value, then receive the signal on the second reception channel in a second reception cycle time shorter than the cycle time of the intermittent reception.

3. The fire alarm (30a) of claim 1 or 2, wherein
communication on the second reception channel is carried out with a sync signal regularly transmitted from the management device (20) so that synchronization is established with the management device (20), and
the communication circuit is configured to, after receiving the sync signal, start performing the intermittent reception in the cycle time of the intermittent reception at a point in time when the sync signal is received.

4. The fire alarm of claim 1, wherein
the communication circuit is further configured to transmit a signal to the different fire alarm (30b,30d), and
the communication circuit is configured to, if transmitting a signal to the different fire alarm (30b,30c) after receiving the sync signal, perform transmission processing of transmitting the signal to the different fire alarm (30b,30c) at a timing when the communication circuit is activated.

5. The fire alarm (30a) of claim 4, wherein
the transmission processing is carried out in a cycle time shorter than the cycle time of the intermittent reception.

6. The fire alarm (30a) of claim 5, wherein
the communication circuit is configured to, if receiving, as a result of transmitting the signal to the different fire alarm 830b,30c) at the timing when the communication circuit is activated, no response signal acknowledging reception of the signal from the different fire alarm (30b,30c), transmit the signal to the different fire alarm (30v,30c) according to an asynchronous communications protocol.

7. The fire alarm (30a) of claim 5, wherein
the communication circuit is configured to, if receiving, as a result of transmitting the signal to the different fire alarm (30b,30c) at the timing when the communication circuit is activated, no response signal acknowledging reception of the signal from the different fire alarm (30b,30c), transmit the signal to the different fire alarm (30b,30c) via the management device (20) on the second reception channel.

8. A fire alarm (30a) comprising:
a communication circuit configured to
receive a signal by intermittent reception,
communicate with another fire alarm (30b,30c) according to a first communications protocol and to communicate with a management device (20) according to a second communications protocol different from the first communications protocol, the first communications protocol using a first reception channel to receive a signal from said another fire alarm (30b,30c) and the second communications protocol using a second reception channel, different from the first reception channel, to receive a signal from the management device (20); and
a controller (33) configured to activate the communication circuit in a cycle time of the intermittent reception,
the communication circuit being further configured to,
after being activated, measure a second strength of a signal on the second reception channel and,
if the second strength is equal to or greater than a second threshold value, receive the signal on the second reception channel,
else measure a first strength of a signal on the first reception channel and then,
if the first strength is equal to or greater than a first threshold value, receive the signal on the first reception channel.

9. A fire alarm system comprising:
a plurality of fire alarms (30a), each being configured as recited in any one of claims 1-8, and
the management device (20).

## Patentansprüche

1. Feueralarm (30a), aufweisend:
eine Kommunikationsschaltung (32), die konfiguriert ist, um
ein Signal durch intermittierenden Empfang zu empfangen,
mit einem anderen Feueralarm (30b, 30c) gemäß einem ersten Kommunikationsprotokoll zu kommunizieren und mit einer Verwaltungsvorrichtung (20) gemäß einem zweiten Kommunikationsprotokoll, das sich von dem ersten Kommunikationsprotokoll unterscheidet, zu kommunizieren, wobei das erste Kommunikationsprotokoll einen ersten Empfangskanal verwendet, um ein Signal von dem anderen Feueralarm (30b, 30c) zu empfangen, und das zweite Kommunikationsprotokoll einen zweiten Empfangskanal, der sich von dem ersten Empfangskanal unterscheidet, verwendet, um von der Verwaltungsvorrichtung (20) ein Signal zu empfangen; und
einen Controller (33), der konfiguriert ist, um die Kommunikationsschaltung in einer Zykluszeit des intermittierenden Empfangs zu aktivieren,
wobei die Kommunikationsschaltung ferner konfiguriert ist, um
nach der Aktivierung eine erste Stärke eines Signals auf dem ersten Empfangskanal zu messen, und,
wenn die erste Stärke gleich oder größer als ein erster Schwellenwert ist, das Signal auf dem ersten Empfangskanal zu empfangen,
andernfalls eine zweite Stärke eines Signals auf dem zweiten Empfangskanal zu messen, und dann,
wenn die zweite Stärke gleich oder größer als ein zweiter Schwellenwert ist,
das Signal auf dem zweiten Empfangskanal zu empfangen.

2. Feueralarm (30a) nach Anspruch 1, wobei
die Kommunikationsschaltung konfiguriert ist, um:
das Signal auf dem ersten Empfangskanal zu empfangen;
wenn ein Ergebnis, das durch ein Messen der ersten Stärke des Signals erhalten wird, das auf dem ersten Empfangskanal empfangen wird, gleich oder größer als der erste Schwellenwert ist, das Signal auf dem ersten Empfangskanal in einer ersten Empfangszykluszeit, die kürzer als die Zykluszeit des intermittierenden Empfangs ist, zu empfangen;
wenn das Ergebnis kleiner als der erste Schwellenwert ist, ein Signal auf dem zweiten Empfangskanal zu empfangen; und
wenn ein Ergebnis, das durch ein Messen der zweiten Stärke des Signals, das auf dem zweiten Empfangskanal empfangen wird, erhalten wird, gleich oder größer als der zweite Schwellenwert ist, das Signal auf dem zweiten Empfangskanal in einer zweiten Empfangszykluszeit, die kürzer als die Zykluszeit des intermittierenden Empfangs ist, zu empfangen.

3. Feueralarm (30a) nach Anspruch 1 oder 2, wobei
eine Kommunikation auf dem zweiten Empfangskanal mit einem Synchronisationssignal, das regelmäßig von der Verwaltungsvorrichtung (20) gesendet wird, durchgeführt wird, so dass eine Synchronisation mit der Verwaltungsvorrichtung (20) hergestellt wird, und
die Kommunikationsschaltung konfiguriert ist, um nach Empfang des Synchronisationssignals mit der Durchführung des intermittierenden Empfangs in der Zykluszeit des intermittierenden Empfangs zu einem Zeitpunkt zu beginnen, zu dem das Synchronisationssignal empfangen wird.

4. Feueralarm nach Anspruch 1, wobei
die Kommunikationsschaltung ferner konfiguriert ist, um ein Signal an den unterschiedlichen Feueralarm (30b, 30d) zu senden, und
die Kommunikationsschaltung konfiguriert ist, um, wenn sie nach einem Empfang des Synchronisationssignals ein Signal an den unterschiedlichen Feueralarm (30b, 30c) sendet, eine Sendeverarbeitung zum Senden des Signals an den unterschiedlichen Feueralarm (30b, 30c) zu einem Zeitpunkt durchzuführen, zu dem die Kommunikationsschaltung aktiviert ist.

5. Feueralarm (30a) nach Anspruch 4, wobei
die Sendeverarbeitung in einer Zykluszeit ausgeführt wird, die kürzer als die Zykluszeit des intermittierenden Empfangs ist.

6. Feueralarm (30a) nach Anspruch 5, wobei
die Kommunikationsschaltung konfiguriert ist, um, wenn sie als Ergebnis des Sendens des Signals an den unterschiedlichen Feueralarm (30b, 30c) zu dem Zeitpunkt, zu dem die Kommunikationsschaltung aktiviert wird, kein Antwortsignal empfängt, das den Empfang des Signals von dem unterschiedlichen Feueralarm (30b, 30c) bestätigt, das Signal gemäß einem asynchronen Kommunikationsprotokoll an den unterschiedlichen Feueralarm (30b, 30c) zu senden.

7. Feueralarm (30a) nach Anspruch 5, wobei
die Kommunikationsschaltung konfiguriert ist, um, wenn sie als Ergebnis des Sendens des Signals an den unterschiedlichen Feueralarm (30b, 30c) zu dem Zeitpunkt, zu dem die Kommunikationsschaltung aktiviert wird, kein Antwortsignal empfängt, das den Empfang des Signals von dem unterschiedlichen Feueralarm (30b, 30c) bestätigt, das Signal an den unterschiedlichen Feueralarm (30b, 30c) über die Verwaltungsvorrichtung (20) auf dem zweiten Empfangskanal zu senden.

8. Feueralarm (30a), aufweisend:
eine Kommunikationsschaltung, die konfiguriert ist, um
ein Signal durch intermittierenden Empfang zu empfangen,
mit einem anderen Feueralarm (30b, 30c) gemäß einem ersten Kommunikationsprotokoll zu kommunizieren und mit einer Verwaltungsvorrichtung (20) gemäß einem zweiten Kommunikationsprotokoll zu kommunizieren, das sich von dem ersten Kommunikationsprotokoll unterscheidet, wobei das erste Kommunikationsprotokoll einen ersten Empfangskanal verwendet, um ein Signal von dem anderen Feueralarm (30b, 30c) zu empfangen, und das zweite Kommunikationsprotokoll einen zweiten Empfangskanal verwendet, der sich von dem ersten Empfangskanal unterscheidet, um ein Signal von der Verwaltungsvorrichtung (20) zu empfangen; und
einen Controller (33), der konfiguriert ist, um die Kommunikationsschaltung in einer Zykluszeit des intermittierenden Empfangs zu aktivieren,
wobei die Kommunikationsschaltung ferner konfiguriert ist, um,
nach ihrer Aktivierung eine zweite Stärke eines Signals auf dem zweiten Empfangskanal zu messen, und,
wenn die zweite Stärke gleich oder größer als ein zweiter Schwellenwert ist,
das Signal auf dem zweiten Empfangskanal zu empfangen,
andernfalls eine erste Stärke eines Signals auf dem ersten Empfangskanal zu messen, und
wenn die erste Stärke gleich oder größer als ein erster Schwellenwert ist, das Signal auf dem ersten Empfangskanal zu empfangen.

9. Feueralarmsystem, aufweisend:
mehrere Feueralarme (30a), die jeweils wie in einem der Ansprüche 1-8 beschrieben konfiguriert sind, und
die Verwaltungsvorrichtung (20).

## Revendications

1. Avertisseur d'incendie (30a), comprenant :
un circuit de communication (32) configuré de manière à :
recevoir un signal par le biais d'une réception intermittente ;
communiquer avec un autre avertisseur d'incendie (30b, 30c) selon un premier protocole de communication, et communiquer avec un dispositif de gestion (20) selon un second protocole de communication, différent du premier protocole de communication, le premier protocole de communication faisant appel à un premier canal de réception pour recevoir un signal provenant dudit autre avertisseur d'incendie (30b, 30c), et le second protocole de communication faisant appel à un second canal de réception, différent du premier canal de réception, pour recevoir un signal provenant du dispositif de gestion (20) ; et
un contrôleur (33) configuré de manière à activer le circuit de communication au cours d'un temps de cycle de la réception intermittente ;
le circuit de communication étant en outre configuré de manière à :
après avoir été activé, mesurer une première intensité d'un signal sur le premier canal de réception ; et
si la première intensité est égale ou supérieure à une première valeur de seuil, recevoir le signal sur le premier canal de réception ;
sinon, mesurer une seconde intensité d'un signal sur le second canal de réception, et ensuite,
si la seconde intensité est égale ou supérieure à une seconde valeur de seuil, recevoir le signal sur le second canal de réception.

2. Avertisseur d'incendie (30a) selon la revendication 1, dans lequel :
le circuit de communication est configuré de manière à :
recevoir le signal sur le premier canal de réception ;
si un résultat obtenu en mesurant la première intensité du signal reçu sur le premier canal de réception est égal ou supérieur à la première valeur de seuil, alors recevoir le signal sur le premier canal de réception au cours d'un premier temps de cycle de réception plus court que le temps de cycle de la réception intermittente ;
si le résultat est inférieur à la première valeur de seuil, alors recevoir un signal sur le second canal de réception ; et
si un résultat obtenu en mesurant la seconde intensité du signal reçu sur le second canal de réception est égal ou supérieur à la seconde valeur de seuil, alors recevoir le signal sur le second canal de réception au cours d'un second temps de cycle de réception plus court que le temps de cycle de la réception intermittente.

3. Avertisseur d'incendie (30a) selon la revendication 1 ou 2, dans lequel :
une communication sur le second canal de réception est mise en œuvre avec un signal de synchronisation transmis régulièrement par le dispositif de gestion (20), de sorte qu'une synchronisation est établie avec le dispositif de gestion (20) ; et
le circuit de communication est configuré de manière à, suite à la réception du signal de synchronisation, commencer à mettre en œuvre la réception intermittente au cours du temps de cycle de la réception intermittente, à un instant où le signal de synchronisation est reçu.

4. Avertisseur d'incendie selon la revendication 1, dans lequel :
le circuit de communication est en outre configuré de manière à transmettre un signal à l'avertisseur d'incendie différent (30b, 30d) ; et
le circuit de communication est configuré de manière à, en cas de transmission d'un signal à l'avertisseur d'incendie différent (30b, 30c) suite à la réception du signal de synchronisation, mettre en œuvre un traitement de transmission consistant à transmettre le signal à l'avertisseur d'incendie différent (30b, 30c), à une temporisation où le circuit de communication est activé.

5. Avertisseur d'incendie (30a) selon la revendication 4, dans lequel :
le traitement de transmission est mis en œuvre au cours d'un temps de cycle plus court que le temps de cycle de la réception intermittente.

6. Avertisseur d'incendie (30a) selon la revendication 5, dans lequel :
le circuit de communication est configuré de manière à, s'il ne reçoit, suite à la transmission du signal à l'avertisseur d'incendie différent (30b, 30c) à la temporisation où le circuit de communication est activé, aucun signal de réponse accusant réception du signal provenant de l'avertisseur d'incendie différent (30b, 30c), transmettre le signal à l'avertisseur d'incendie différent (30v, 30c) selon un protocole de communication asynchrone.

7. Avertisseur d'incendie (30a) selon la revendication 5, dans lequel :
le circuit de communication est configuré de manière à, s'il ne reçoit, suite à la transmission du signal à l'avertisseur d'incendie différent (30b, 30c), à la temporisation où le circuit de communication est activé, aucun signal de réponse accusant réception du signal provenant de l'avertisseur d'incendie différent (30b, 30c), transmettre le signal à l'avertisseur d'incendie différent (30b, 30c), par l'intermédiaire du dispositif de gestion (20), sur le second canal de réception.

8. Avertisseur d'incendie (30a) comprenant :
un circuit de communication configuré de manière à :
recevoir un signal par le biais d'une réception intermittente ;
communiquer avec un autre avertisseur d'incendie (30b, 30c) selon un premier protocole de communication, et communiquer avec un dispositif de gestion (20) selon un second protocole de communication, différent du premier protocole de communication, le premier protocole de communication faisant appel à un premier canal de réception pour recevoir un signal provenant dudit autre avertisseur d'incendie (30b, 30c), et le second protocole de communication faisant appel à un second canal de réception, différent du premier canal de réception, pour recevoir un signal provenant du dispositif de gestion (20) ; et
un contrôleur (33) configuré de manière à activer le circuit de communication au cours d'un temps de cycle de la réception intermittente ;
le circuit de communication étant en outre configuré de manière à :
après avoir été activé, mesurer une seconde intensité d'un signal sur le second canal de réception ; et
si la seconde intensité est égale ou supérieure à une seconde valeur de seuil, recevoir le signal sur le second canal de réception ;
sinon, mesurer une première intensité d'un signal sur le premier canal de réception, et ensuite,
si la première intensité est égale ou supérieure à une première valeur de seuil, recevoir le signal sur le premier canal de réception.

9. Système d'alarme incendie comprenant :
une pluralité d'avertisseurs d'incendie (30a), chaque avertisseur étant configuré selon l'une quelconque des revendications 1 à 8 ; et
le dispositif de gestion (20).
